# FASCICULE DE BREVET EUROPEEN

(11) **EP 0 926 283 B1**
(45) Date de publication et mention de la délivrance du brevet: **29.08.2001**
(21) Numéro de dépôt: 98420237.4
(22) Date de dépôt: 17.12.1998
(51) Int. Cl.: D03C 3/20, H02K 21/18, H02K 16/04, H02K 1/14, H02K 1/18, H02K 15/02

(54) **Actionneur rotatif électrique, pour la formation de la foule sur un métier à tisser et son procédé de fabrication, mécanique d'armure et métier à tisser**
Elektrischer Drehaktuator für die Fachbildung in einer Webmaschine sowie Verfahren zu dessen Herstellung, Fachbildungsvorrichtung und Webmaschine
Rotary electrical actuator for a shedding mechanism on a loom and method of manufacturing the same, shedding mechanism and loom

(30) Priorité: 24.12.1997 FR 9716738
(43) Date de publication de la demande: 30.06.1999
(73) Titulaire: STAUBLI FAVERGES, 74210 Faverges (FR)
(72) Inventeur: Braun, Dominique, 74210 Faverges (FR); Bourgeaux, Pierre, Lachat, 74330 Poisy (FR); Iltis, Patrick, 74410 Saint Jorioz (FR)
(74) Mandataire: Myon, Gérard Jean-Pierre

(56) Documents cités:
- EP-A- 0 353 005
- EP-A- 0 750 061
- WO-A-97/33024
- DE-U- 7 908 193
- US-A- 2 792 510
- US-A- 3 502 922
- US-A- 5 069 256
- US-A- 5 619 086
- PATENT ABSTRACTS OF JAPAN vol. 010, no. 376 (E-464), 13 décembre 1986 & JP 61 167360 A (MATSUSHITA ELECTRIC IND CO LTD), 29 juillet 1986
- PATENT ABSTRACTS OF JAPAN vol. 005, no. 186 (E-084), 25 novembre 1981 & JP 56 112857 A (SEIKOSHA CO LTD), 5 septembre 1981
- PATENT ABSTRACTS OF JAPAN vol. 098, no. 002, 30 janvier 1998 & JP 09 268450 A (TOYOTA AUTOM LOOM WORKS LTD), 14 octobre 1997

## Description

L'invention a trait à un actionneur électrique pour la formation de la foule sur un métier à tisser, notamment pour la commande des arcades d'une mécanique d'armure du type Jacquard ou des cadres d'une ratière et à un procédé de fabrication d'un tel actionneur. L'invention a également trait à une mécanique d'armure comprenant un tel actionneur et à un métier à tisser équipé d'une telle mécanique.

Dans les mécaniques d'armure du type Jacquard, il est connu d'entraîner, en opposition de phase, deux cadres portant chacun une multiplicité de griffes ou couteaux horizontaux aptes à déplacer verticalement des crochets reliés aux arcades par un mécanisme à poulies ou à moufle. Des dispositifs mécaniques ou électromécaniques sont prévus pour immobiliser ces crochets le long de leur course verticale. Ce genre de dispositif connu nécessite une puissance importante pour la manoeuvre des cadres de griffes, cette puissance étant fournie par l'arbre moteur du métier à tisser, ce qui induit un sur-dimensionnement de ce métier.

Il est également connu, par exemple de EP 353 005 A, d'utiliser un moteur rotatif tel qu'un moteur pas à pas ou un servo-moteur pour commander linéairement une cordelette appartenant à un métier à tisser. Compte tenu du grand nombre de moteurs électriques utilisés dans la mécanique d'armure associée à un métier à tisser, nombre qui peut atteindre, voire dépasser, 10 000, ces moteurs doivent être d'un encombrement et d'un prix de revient les plus faibles possible, tout en présentant une grande fiabilité. En particulier, le bobinage du fil conducteur doit être réalisé rapidement tout en garantissant un niveau suffisant de qualité. En outre, le stator doit avoir des dimensions adaptées à celles du rotor qui, pour optimiser son inertie, doit avoir un diamètre le plus faible possible. Enfin, les tolérances de fabrication des tôles des empilages formant les stators ne doivent pas gêner leur fabrication ou faire diminuer leur rendement.

Le but de la présence invention est de proposer un actionneur rotatif électrique apte à commander le déplacement d'une ou plusieurs arcades, compact et simple à fabriquer.

Dans cet esprit, l'invention concerne un actionneur électrique pour la formation de la foule sur un métier à tisser, notamment pour la commande des arcades d'une mécanique d'armure du type Jacquard ou les cadres d'une ratière comprenant un rotor et au moins un stator, caractérisé en ce que l'armature dudit stator est formée d'un empilage de tôles, et en ce que le stator est formé d'au moins deux éléments statoriques disposés côte à côte suivant l'axe de rotation du rotor, chaque élément statorique comprenant deux zones de réception d'un enroulement de fil électriquement conducteur, certaines au moins des tôles de chaque zone disposées en regard les unes des autres étant appariées.

Grâce à l'invention, il est possible de réaliser un actionneur rotatif électrique dans lequel le flux électromagnétique circulant dans le stator est optimal quelles que soient les tolérances de fabrication des tôles qui le constituent et, en particulier, quelles que soient les variations d'épaisseur existant dans un lot de tôles. En effet, le fait que les tôles sont appariées, dans les deux zones de réception de l'enroulement de fil conducteur permet un transfert efficace du flux électromagnétique d'une zone vers l'autre.

Selon un premier aspect avantageux de l'invention, les tôles appariées dans chaque zone sont formées à partir d'une unique tôle s'étendant sur toute la longueur de l'armature. Grâce à cet aspect de l'invention, si une tôle est plus épaisse ou moins épaisse que ses voisines, cette variation d'épaisseur se retrouve sur toute la longueur de l'armature et par voie de conséquence dans les deux zones de réception de l'enroulement de fil électrique. Il n'en résulte donc pas de défaut d'alignement des tôles constituant des armatures, ce qui favorise le flux électromagnétique.

Selon un autre aspect avantageux de l'invention, les tôles comprennent, dans leur partie centrale et avant mise en forme de l'armature, un pont sécable reliant des parties destinées à être partiellement entourées par ledit enroulement de fil électriquement conducteur. Grâce à cet aspect de l'invention, l'actionneur est de fabrication aisée, donc de prix de revient relativement bas, dans la mesure où le bobinage du stator peut être réalisé à plat, donc à vitesse élevée, avant que la géométrie finale du stator ne soit atteinte par rupture du pont sécable.

Selon un autre aspect avantageux de l'invention, chaque tôle se prolonge dans une direction sensiblement perpendiculaire au pont sécable par un doigt, un doigt d'une tôle s'étendant d'un côté du pont qu'elle comprend alors que les doigts des deux tôles adjacentes s'étendent, dans la même direction, de l'autre côté des ponts qu'elles comprennent. Cette construction des noyaux ou armatures des stators permet une mise en forme du stator, pour réaliser l'entrefer, par coincement des doigts formés dans les tôles les uns par rapport aux autres.

Dans ce cas, on peut prévoir que les doigts des tôles sont aptes à s'imbriquer les uns dans les autres, après rupture des ponts sécables. Cette imbrication des doigts des tôles formant les armatures des stators permet un bon contact électromagnétique entre celles-ci et, par voie de conséquence, une conduction maximale du flux électromagnétique dans l'entrefer correspondant.

Avantageusement, les tôles formant les éléments statoriques sont disposées tête-bêche. Grâce à cet aspect de l'invention, la répartition des doigts de part et d'autre des ponts sécables peut être obtenue avec une seule géométrie de tôles, ce qui simplifie grandement la fabrication.

Selon un autre aspect avantageux de l'invention, l'actionneur comprend un socle pourvu de deux logements aptes à recevoir chacun une partie d'un stator, ce socle étant muni de moyens pour le raccordement de chaque stator avec des broches d'alimentation électrique dudit actionneur. Ce socle sert de structure porteuse pour l'actionneur suivant l'invention.

L'invention concerne également un procédé de fabrication d'un actionneur tel que précédemment décrit et, plus spécifiquement, un procédé caractérisé en ce qu'il consiste à réaliser chaque élément statorique de l'actionneur par bobinage à plat sur une armature et à plier cette dernière afin d'en rapprocher les extrémités, un logement pour la réception d'un rotor étant formé par le rapprochement de ces extrémités. Le bobinage à plat des armatures peut être réalisé à très grande vitesse, éventuellement sur plusieurs armatures disposées en parallèle, ce qui permet de minimiser les coûts de fabrication.

Selon un premier aspect avantageux du procédé suivant l'invention, le pliage de l'armature a lieu par rupture de ponts sécables. La présence des ponts sécables garantit un positionnement précis des différentes parties constitutives de l'armature jusqu'à l'instant de la rupture de ces ponts.

Dans ce cas, on peut en outre prévoir que le pliage de l'armature résulte dans l'imbrication de doigts répartis en alternance de part et d'autre des ponts sécables.

Selon un autre aspect avantageux du procédé suivant l'invention, celui-ci comprend une étape de surmoulage du ou des stators de l'actionneur sur un socle pourvu de moyens pour l'alimentation électrique du ou des stators. Le socle définit le positionnement relatif des stators avant leur surmoulage, tout en permettant leur alimentation électrique. Ce socle permet donc d'obtenir un actionneur surmoulé, donc de prix de revient faible en grande quantité, tout en garantissant un taux de fiabilité satisfaisant.

L'invention concerne également une mécanique d'armure qui comprend un ou des actionneur (s) tel(s) que précédemment décrit(s) ou fabriqué(s) comme indiqué ci-dessus et un métier à tisser équipé d'une telle mécanique. Cette mécanique est plus simple à mettre en oeuvre et à entretenir que les dispositifs de l'art antérieur et permet une commande fil à fil d'un harnais de métier Jacquard. Le rendement d'un métier à tisser conforme à l'invention est donc sensiblement amélioré par rapport à la technique connue.

L'invention sera mieux comprise et d'autres avantages de celle-ci apparaîtront plus clairement à la lumière de la description qui va suivre d'un mode de réalisation d'un actionneur rotatif électrique conforme à son principe, donnée uniquement à titre d'exemple et faite en référence aux dessins annexés dans lesquels :
- La figure 1 est une coupe longitudinale d'un actionneur conforme à l'invention ;

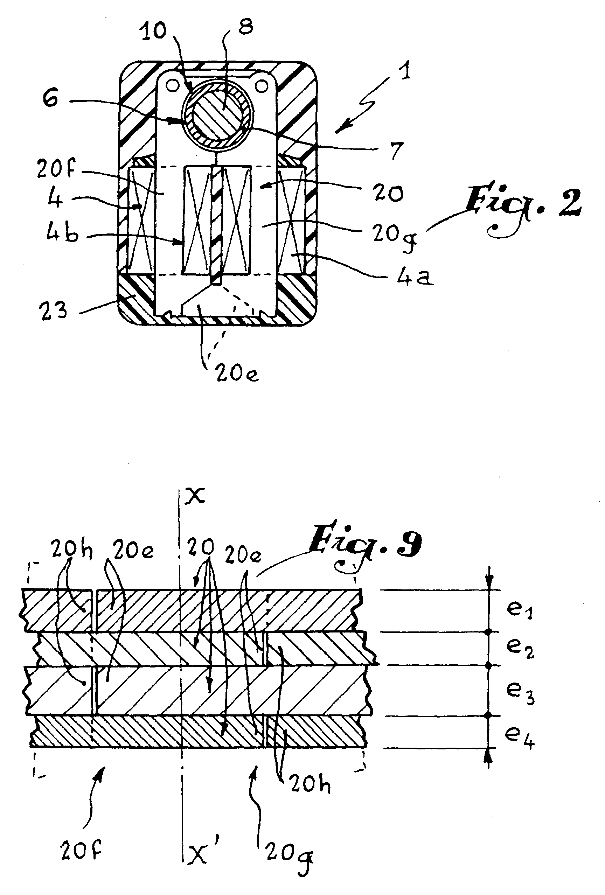

- La figure 2 est une coupe transversale selon la ligne II-II de la figure 1 ;
- La figure 3 est une vue en perspective de deux tôles adjacentes appartenant à l'armature d'un élément statorique de l'actionneur des figures 1 à 2 ;
- La figure 4 est une vue en perspective d'un empilement de tôles, du type de celles de la figure 3, destinées à former l'armature d'un élément statorique, à un premier stade de fabrication ;
- Les figures 5 à 7 sont des vues analogues à la figure 4 illustrant l'élément statorique à trois autres stades successifs de fabrication ;
- La figure 8 est une vue en perspective de l'élément statorique obtenu, représenté en cours d'installation sur un socle de réception et
- La figure 9 est une coupe schématique partielle de principe de l'élément statorique selon la ligne IX-IX à la figure 8.

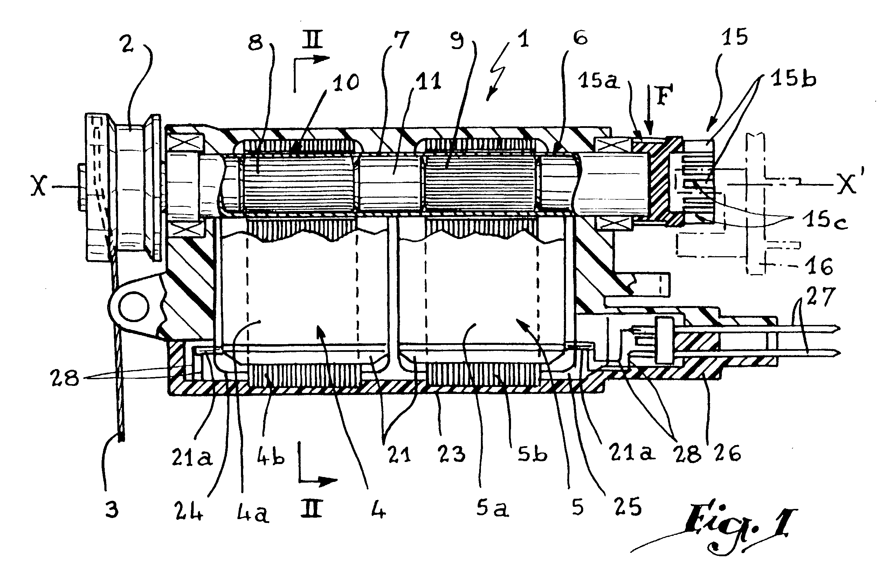

L'actionneur rotatif électrique 1, représenté à la figure 1, est destiné à assurer l'enroulement, sur une poulie 2, d'une arcade 3 reliée à un ou plusieurs fils de chaîne d'une mécanique d'armure de type Jacquard. L'actionneur 1 est un actionneur biphasé. Il comprend un stator formé de deux éléments statoriques 4 et 5 globalement alignés selon un axe XX' et aptes à coopérer avec un rotor 6 formé d'un tube 7 centré sur un axe XX'. Le tube 7 est, de préférence réalisé dans un matériau amagnétique, tel que par exemple du laiton. Le tube 7 contient deux aimants permanents 8 et 9, disposés en vis-à-vis des deux éléments statoriques 4 et 5.

Les éléments 4 et 5 comprennent des bobinages 4a et 5a de fil électriquement conducteur, tel que du fil de cuivre, enroulé autour d'empilages 4b et 5b de tôles magnétiquement conductrices. La forme des empilages 4b et 5b est telle qu'ils forment un logement circulaire 10 pour la réception du tube 7. La taille du logement 10 définit l'entrefer des éléments statoriques 4 et 5 par rapport au rotor 6.

D'autres formes de rotors, éventuellement pourvus de tuiles aimantées externes, pourraient également être incorporées à l'actionneur de l'invention.

L'actionneur rotatif suivant l'invention fonctionne efficacement dès lors que les deux aimants 8 et 9 ont des polarités orientées différemment, la valeur de l'angle de décalage pouvant en principe être comprise entre 0 et 180°. En pratique, elle est comprise entre 60 et 120°. Cependant, la valeur de 90° présente, pour un actionneur biphasé l'avantage supplémentaire qu'elle permet d'obtenir le meilleur rendement électromagnétique et un démarrage optimisé quelle que soit la position d'arrêt de l'actionneur.

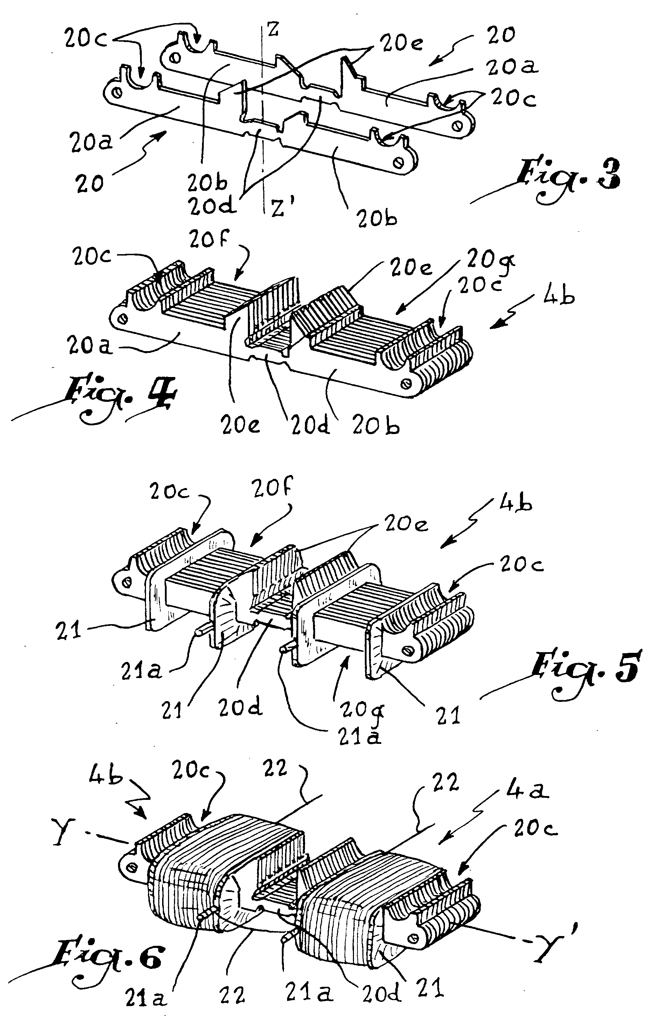

Les empilages 4b et 5b qui constituent les armatures ou noyaux des stators 4 et 5 sont formés de tôles 20 qui apparaissent, en particulier, à la figure 3. Ces tôles ont toutes la même géométrie et comprennent deux parties 20a et 20b destinées à être partiellement entourées par les bobinages 4a et 5a et munies, à leurs extrémités, d'une encoche semi-circulaire 20c destinée à former le logement 10. Dans leur partie centrale, les tôles 20 comprennent un pont ou languette 20d sécable, c'est-à-dire pouvant être séparé des parties 20a et 20b, par exemple par pliage.

La partie 20a de chaque tôle 20 porte un doigt 20e qui s'étend de manière sensiblement perpendiculaire au pont 20d. L'autre partie 20b ne comprend pas un tel doigt. Les tôles 20 sont disposées tête-bêche, c'est-à-dire côte à côte, une tôle sur deux étant pivotée de 180° autour d'un axe ZZ' sensiblement vertical à la figure 3, de telle sorte que chaque partie 20a des tôles situées à l'intérieur des empilages 4b et 5b jouxte deux parties 20b alors que les parties 20b jouxtent respectivement les parties 20a des tôles adjacentes. De cette manière, les doigts 20e des différentes tôles s'étendent de chaque côté des ponts 20d, les doigts d'une tôle s'étendant d'un côté du pont qu'elle comporte alors que les doigts des deux tôles adjacentes s'étendent, dans la même direction, de l'autre côté des ponts qu'elles comportent.

Un empilage est formé d'un nombre variable de tôles, par exemple compris entre 12 et 50, notamment de l'ordre de 32. Lorsqu'un empilage 4b est formé et comme cela apparaît à la figure 4, les doigts 20e s'étendent, en alternance, de part et d'autre des ponts sécables 20d, alors que les encoches 20c définissent deux demi-cylindres creux destinés à former le logement 10.

La fabrication de l'un des stators utilisés dans l'actionneur de l'invention comprend une étape dans laquelle des collerettes 21 en matière isolante, visibles à la figure 5, sont surmoulées autour de l'empilage 4b. Ces collerettes maintiennent les différentes tôles 20 de l'empilement 4b en position les unes par rapport aux autres et définissent deux zones 20f et 20g pour l'enroulement du fil électriquement conducteur.

Certaines collerettes 21 portent des pions 21a autour desquels peuvent être enroulées les extrémités ou certaines parties intermédiaires du fil destiné à former le bobinage 4a. Le bobinage 4a est enroulé autour de l'armature 4b en faisant tourner celle-ci autour d'un axe Y-Y' représenté à la figure 6, de telle sorte que le bobinage peut être réalisé très rapidement et "à plat", c'est-à-dire en faisant tourner l'empilage ou armature 4b autour d'un unique axe. Le fil 22 passe de la zone 20f à la zone 20g en étant enroulé, sur au moins un tour, autour des pions 21a.

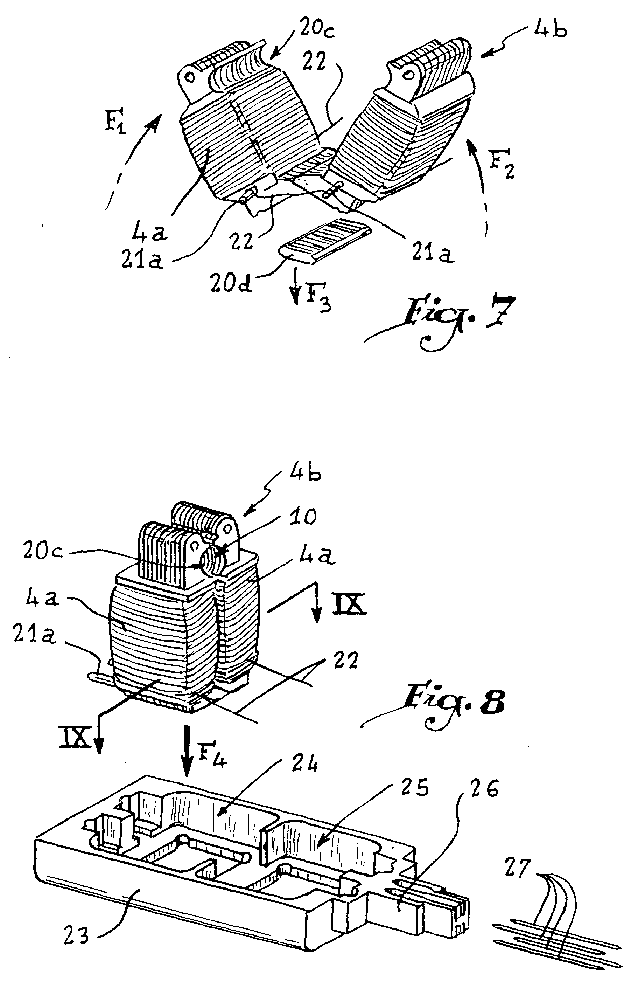

La mise en forme de l'élément statorique 4 peut alors être réalisée. On rapproche les extrémités des deux moitiés du bobinage 4a, au niveau des encoches 20c, par pliage des tôles 20 de manière sensiblement perpendiculaire à l'axe Y-Y' en imprimant aux tôles 20 deux forces F₁ et F₂, représentées à la figure 7. Ces forces F₁ et F₂ induisent la rupture des ponts sécables 20d qui sont évacués dans une direction F₃ alors que les doigts 20e des différentes tôles 20 viennent s'imbriquer les uns dans les autres de façon à constituer une armature unique sur le plan électromagnétique. En d'autres termes, l'alternance des doigts 20e disposés de chaque côté des ponts sécables 20b permet d'obtenir, par coincement et coopération de forme, une unique armature 4b formée par l'empilage des tôles 20. Lorsque les deux moitiés du stator 4 sont rabattues l'une vers l'autre, elles définissent, comme cela apparaît à la figure 8, le logement 10 pour la réception du rotor 6. Ce logement définit l'entrefer des stators 4 et 5.

Le fait que les tôles 20 s'étendent sur toute la longueur de l'armature 4b dans la position des figures 4 à 6 permet de s'assurer que, même en cas de variation d'épaisseur des tôles 20, un espace suffisant est ménagé pour la réception d'un doigt 20e entre les deux doigts adjacents. En effet, dans la position de la figure 7, compte tenu des tolérances de fabrication, la largeur de l'espace défini entre deux doigts 20e, appartenant à deux tôles 20 orientées de la même façon, est déterminée par la largeur de la tôle intermédiaire située entre ces deux tôles. Cette largeur peut être supposée égale à celle du doigt que porte la tôle intermédiaire. Ainsi, la largeur de l'espace libre de réception du doigt de la tôle intermédiaire est toujours égale à la largeur de ce doigt.

Ainsi, les deux parties de tôles en regard qui appartiennent aux deux moitiés de l'armature 4b proviennent de la même tôle. Elles sont donc appariées et ont, en particulier, la même épaisseur.

Sur la figure 8, on a représenté un socle 23 pour la réception de la partie du rotor 4 opposée à celle qui porte le logement 10. Ce socle 23 est pourvu de deux logements 24 et 25 pour la réception des deux éléments 4 et 5 formant le stator. L'élément 4 est mis en place, selon une direction F₄, dans le socle 23 alors que l'élément 5, non représenté, est mis en place de façon analogue dans le logement 25. Le socle 23 comprend une extension 26, apte à recevoir quatre broches 27 pour l'alimentation électrique du stator 5. Des moyens pour le raccordement électrique de chaque stator 4 ou 5 avec les broches correspondantes 27 sont constitués par des câbles électriques moulés dans le socle 23, par des pistes formées à la surface inférieure des logements 24 et 25 ou par tout autre moyen équivalent. Le raccordement des éléments 4 et 5 avec les broches 27 est schématisé par des câbles 28 à la figure 1. On note que les pions 21a peuvent servir de points de jonction entre les câbles 28 et le fil 22.

Lorsque les deux éléments 4 et 5 sont en place dans les logements 24 et 25 du socle 23, ils peuvent être surmoulés dans un matériau électriquement isolant, tel que par exemple un élastomère, afin de constituer un ensemble monobloc et résistant aux chocs.

Comme il apparaît plus clairement à la figure 9, lorsque l'élément statorique 4 est formé, les doigts 20e des différentes tôles sont disposés en alternance de parc et d'autre de la trace de l'axe XX' dans le plan de la figure 9. Compte tenu du mode de fabrication de l'élément statorique 4, chaque doigt 20e est en regard d'une partie de tôle 20h qui appartient à la même tôle 20 avant rupture du pont sécable, de sorte que les variations d'épaisseurs e₁, e₂, e₃ et e₄ des tôles 20 n'induisent pas de défaut d'alignement des éléments 20e et 20h entre eux. Dans ces conditions, le flux électromagnétique transite de façon optimale entre les deux zones 20f et 20g de l'armature 4b.

On comprend que les tôles d'extrémité des zones d'enroulement 20f et 20g ne sont pas nécessairement appariées car il n'existe pas de risque de coincement à leur niveau et car le flux magnétique reste optimal dans le reste de l'élément statorique.

L'actionneur ainsi réalisé est d'un prix de revient très satisfaisant et fonctionne correctement quelles que soient les tolérances de fabrication des tôles constitutives des éléments statoriques. Il peut donc être monté en grand nombre sur une mécanique de type Jacquard pour la formation de la foule sur métier à tisser.

Bien que décrite essentiellement en référence à un actionneur pour mécanique Jacquard, l'invention est également applicable aux machines textiles en général et, en particulier, aux métiers à tisser équipés de ratière, pour la commande des cadres de lisses, ou aux machines de bonneterie, pour la commande des aiguilles.

## Revendications

1. Actionneur rotatif électrique (1) pour la formation de la foule sur métier à tisser, notamment pour la commande des arcades (3) d'une mécanique d'armure du type Jacquard ou des cadres d'une ratière, comprenant un rotor (6) et au moins un stator (4, 5) **caractérisé en ce que** l'armature (4b, 5b) dudit stator (4,5) est formée d'un empilage de tôles (20), et en ce que ledit stator est formé d'au moins deux éléments statoriques (4, 5) disposés côte à côte suivant l'axe (XX') de rotation dudit rotor, chaque élément statorique comprenant deux zones (20f, 20g) de réception d'un enroulement (4a, 5a) de fil électriquement conducteur (22), certaines au moins des tôles de chaque zone disposées en regard les unes des autres étant appariées.

2. Actionneur rotatif selon la revendication 1, **caractérisé en ce que** lesdites tôles appariées dans chaque zone (20f, 20g) sont formées à partir d'une unique tôle (20) s'étendant sur toute la longueur de ladite armature (4b, 5b).

3. Actionneur rotatif selon la revendication 2, **caractérisé en ce que** lesdites tôles appariées (20) comprennent, dans leur partie centrale et avant mise en forme de ladite armature (4b, 5b), un pont sécable (20d) reliant des parties (20a, 20b) destinées à être partiellement entourées par ledit enroulement (4a, 5a) de fil électriquement conducteur (22).

4. Actionneur rotatif selon la revendication 3, **caractérisé en ce que** chaque tôle se prolonge dans une direction sensiblement perpendiculaire audit pont (20d), par un doigt (20e), un doigt d'une tôle s'étendant d'un côté du pont qu'elle comprend, alors que les doigts des deux tôles adjacentes s'étendent dans la même direction, de l'autre côté des ponts qu'elles comprennent.

5. Actionneur rotatif selon la revendication 4, **caractérisé en ce que** les doigts (20e) desdites tôles sont aptes à s'imbriquer les uns dans les autres après rupture desdits ponts sécables (20d).

6. Actionneur rotatif selon l'une des revendications précédentes, **caractérisé en ce que** lesdites tôles (20) formant lesdits éléments statoriques (4, 5) sont disposées tête-bêche.

7. Actionneur rotatif selon l'une des revendications précédentes, **caractérisé en ce qu**'il comprend un socle (23) pourvu de deux logements (24, 25) aptes à recevoir chacun une partie d'un stator (4, 5), ledit socle étant muni de moyens pour le raccordement (28) de chaque stator avec des broches (27) d'alimentation électrique dudit actionneur, (1).

8. Procédé de fabrication d'un actionneur selon l'une des revendications précédentes, **caractérisé en ce qu**'il consiste à réaliser chaque élément statorique (4, 5) dudit actionneur par bobinage à plat sur une armature (4b, 5b) et à plier (F₁, F₂) ladite armature afin d'en rapprocher les extrémités (20c), un logement (10) de réception d'un rotor (6) étant formé par le rapprochement de ces extrémités.

9. Procédé selon la revendication 8, **caractérisé en ce que** ledit pliage de l'armature (4b, 5b) a lieu par rupture de ponts sécables (20d).

10. Procédé selon la revendication 9, **caractérisé en ce que** ledit pliage de ladite armature (4b, 5b) résulte dans l'imbrication de doigts (20e) répartis en alternance de part et d'autre desdits ponts sécables (20d).

11. Procédé selon l'une des revendications 8 à 10, **caractérisé en ce qu**'il comprend une étape de surmoulage du ou des stators (4, 5) sur un socle (23) pourvu de moyens pour l'alimentation électrique (27, 28) du ou desdits stators.

12. Mécanique d'armure de métier à tisser, **caractérisée en ce qu**'elle comprend au moins un actionneur conforme à l'une des revendications 1 à 7 ou fabriqué selon l'une des revendications 8 à 11.

13. Métier à tisser, **caractérisé en ce qu**'il comprend une mécanique d'armure selon la revendication 12.

## Patentansprüche

1. Rotierendes elektrisches Betätigungselement (1) für die Fachbildung an einem Webstuhl, insbesondere für die Steuerung von Harnischkordeln (3) einer Schaftmaschine des Jacquard Typs oder von Maschinenauflagegestellen, mit einem Rotor (6) und mindestens einem Stator (4, 5),
**dadurch gekennzeichnet**, daß der Anker (4b, 5b) des Stators (4, 5) durch einen Blechstapel (20) gebildet wird und daß der Stator aus mindestens zwei Statorelementen (4, 5) gebildet wird, die Seite an Seite entsprechend der Drehachse (XX') des Rotors angeordnet sind, wobei jedes Statorelement zwei Aufnahmezonen (20f, 20g) für eine Wicklung (4a, 5a) aus einem elektrisch leitenden Draht (22) umfaßt, wobei mindestens gewisse der Bleche jeder Zone, die gegenüberliegend angeordnet sind, gepaart sind.

2. Rotierendes Betätigungselement nach Anspruch 1,
**dadurch gekennzeichnet**, daß die in jeder Zone (20f, 20g) gepaarten Bleche aus einem einzigen Blech (20) gebildet sind, das sich über die gesamte Länge des Ankers (4b, 5b) erstreckt.

3. Rotierendes Betätigungselement nach Anspruch 2,
**dadurch gekennzeichnet**, daß die gepaarten Bleche (20) in ihrem mittleren Bereich und vor der Formbildung des Ankers (4b, 5b) eine spaltbare Brücke (20d) umfassen, die Teile (20a, 20b) verbindet, die bestimmt sind, teilweise von den Wicklung (4a, 5a) aus elektrisch leitendem Draht (22) umgeben zu werden.

4. Rotierendes Betätigungselement nach Anspruch 3,
**dadurch gekennzeichnet**, daß jedes Blech sich in eine im wesentlichen senkrechte Richtung zur Brücke (20d) durch einen Finger (20e) verlängert, wobei ein Finger eines Bleches sich von einer Seite der Brücke, die es umfaßt, erstreckt, während die Finger der zwei benachbarten zwei Bleche sich in dieselbe Richtung von der anderen Seite der Brücken, die sie umfassen, erstrecken.

5. Rotierendes Betätigungselement nach Anspruch 4,
**dadurch gekennzeichnet**, daß die Finger (20e) der Bleche geeignet sind, sich nach dem Bruch der spaltbaren Brücken (20d) zu verzahnen.

6. Rotierendes Betätigungselement nach einem der vorhergehenden Ansprüche, **dadurch gekennzeichnet**, daß die die Statorelemente (4, 5) bildenden Bleche (20) zueinander umgekehrt angeordnet sind.

7. Rotierendes Betätigungselement nach einem der vorhergehenden Ansprüche, **dadurch gekennzeichnet**, daß es einen Sockel (23) mit zwei Aufnahmen (24, 25) umfaßt, die dazu ausgebildet sind, jeweils einen Teil eines Stators (4, 5) aufzunehmen, wobei der Sockel mit Mitteln (28) zum Verbinden jedes Stators mit elektrischen Versorgungsklemmen (27) des Betätigungselementes (1) ausgebildet sind.

8. Verfahren zum Herstellen eines Betätigungselementes nach einem der vorhergehenden Ansprüche,
**dadurch gekennzeichnet**, daß es darin besteht, jedes Statorelement (4, 5) des Betätigungselementes durch Flachbewicklung auf einen Anker (4b, 5b) und durch Falten (F₁, F₂) des Ankers realisiert wird, um die Enden (20c) sich nähern zu lassen, wobei ein Aufnahmeraum (10) eines Rotors (6) durch das Annähern dieser Enden gebildet wird.

9. Verfahren nach Anspruch 8, **dadurch gekennzeichnet**, daß das Falten des Ankers (4b, 5b) durch Bruch der trennbaren Brücken (20d) stattfindet.

10. Verfahren nach Anspruch 9, **dadurch gekennzeichnet**, daß das Falten des Ankers (4b, 5b) in dem Verzahnen der Finger (20e) resultiert, die alternierend beidseitig der trennbaren Brücken (20d) verteilt sind.

11. Verfahren nach einem der Ansprüche 8 bis 10, **dadurch gekennzeichnet**, daß es einen Schnitt des Einformens des oder der Statoren (4, 5) auf einem Sockel (23) umfaßt, der mit Mitteln zur elektrischen (27, 28) des oder der Statoren versehen ist.

12. Schaftmaschine eines Webstuhls, **dadurch gekennzeichnet**, daß sie mindestens ein Betätigungselement nach einem der Ansprüche 1 bis 7 umfaßt oder nach einem der Ansprüche 8 bis 11 hergestellt ist.

13. Webstuhl, **dadurch gekennzeichnet**, daß er eine Schaftmaschine nach Anspruch 12 umfaßt.

## Claims

1. Rotary electrical actuator (1) for a shedding mechanism on a loom, in particular for controlling the harness cords (3) of a Jacquard-type dobby mechanism or the flames of a dobby, comprising a rotor (6) and at least one stator (4, 5), **characterised in that** the armature (4b, 5b) of the said stator (4, 5) is formed by a stack of plates (20), and in that the said stator is formed from at least two stator elements (4, 5) arranged side by side along the axis (XX') of rotation of the said rotor, each stator element comprising two zones (20f, 20 g) for receiving a winding (4a, 5a) of electrically conducting wire (22), at least some of the plates in each zone which are arranged with respect to each other being paired.

2. Rotary actuator according to claim 1, **characterised in that** the said paired plates in each zone (20f, 20g) are formed from a single plate (20) extending over the entire length of the said armature (4b, 5b).

3. Rotary actuator according to claim 2, **characterised in that** the said paired plates (20) comprise, in their central part, and prior to the shaping of the said armature (4b, 5b), a divisible bridge (20d) linking the parts (20a, 20b) intended to be partially surrounded by the said winding (4a, 5a) of electrically conducting wire (22).

4. Rotary actuator according to claim 3, **characterised in that** each plate is extended in a direction substantially perpendicular to the said bridge (20d) by a finger (20e), a finger of a plate extending on one side of the bridge which it comprises, whilst the fingers of the two adjacent plates extend in the same direction, on the other side of the bridges which they comprise.

5. Rotary actuator according to claim 4, **characterised in that** the fingers (20e) of the said plates are suitable for interlinking with one another after rupture of the said divisible bridges (20d).

6. Rotary actuator according to any one of the preceding claims, **characterised in that** the said plates (20) forming the said stator elements (4, 5) are arranged head to foot.

7. Rotary actuator according to any one of the preceding claims, **characterised in that** it comprises a base (23) provided with two housings (24, 25), each suitable for receiving a part of a stator (4, 5), the said base being equipped with means for the connection (28) of each stator with pins (27) for the electrical supply of the said actuator (1).

8. Method for manufacturing an actuator according to any one of the preceding claims, **characterised in that** it consists in creating each stator element (4, 5) of the said actuator by means of flat-winding on an armature (4b, 5b) and in folding (F₁, F₂) the said armature in order to bring together its ends (20c), a housing (10) for receiving a rotor (6) being formed by the bringing together of these ends.

9. Method according to claim 8, **characterised in that** the said folding of the armature (4b, 5b) is effected by the rupturing of divisible bridges (20d).

10. Method according to claim 9, **characterised in that** the said folding of the said armature (4b, 5b), results in the interlinking of the fingers (20e) distributed alternately on either side of the said divisible bridges (20d).

11. Method according to any one of claims 8 to 10, **characterised in that** it comprises a stage of duplicate moulding of the stator(s) (4, 5) on a base (23) provided with means for the electrical supply (27, 28) of the said stator(s).

12. Dobby mechanism of a loom, **characterised in that** it comprises at least one actuator in conformity with any one of claims 1 to 7, or manufactured according to any one of claims 8 to 11.

13. Weaving loom, **characterised in that** it comprises a dobby mechanism according to claim 12.
